(19) Europäisches Patentamt
European Patent Office
Office européen des brevets

(11) **EP 2 033 818 B1**

(12) **EUROPÄISCHE PATENTSCHRIFT**

(45) Veröffentlichungstag und Bekanntmachung des Hinweises auf die Patenterteilung:
**16.01.2013 Patentblatt 2013/03**

(51) Int Cl.:
***B60G 17/015*** (2006.01)

(21) Anmeldenummer: **08012652.7**

(22) Anmeldetag: **12.07.2008**

(54) **Verfahren zum Erfassen eines Chassisniveaus eines Kraftwagens**

Method for recording the level of a chassis of a motor vehicle

Procédé de détection d'un niveau de châssis d'un véhicule automobile

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **06.09.2007 DE 102007042480**

(43) Veröffentlichungstag der Anmeldung:
**11.03.2009 Patentblatt 2009/11**

(73) Patentinhaber: **WABCO GmbH**
**30432 Hannover (DE)**

(72) Erfinder:
• **Meier, Jörg**
**31840 Hessisch (DE)**
• **Michaelsen, Arne**
**30167 Hannover (DE)**

(56) Entgegenhaltungen:
| | |
|---|---|
| EP-B- 0 398 873 | DE-A1- 4 003 781 |
| DE-A1- 10 331 367 | FR-A- 2 630 684 |
| GB-A- 2 145 984 | JP-A- 60 209 314 |
| US-A- 3 404 898 | US-A- 5 452 919 |
| US-A- 5 619 413 | |

EP 2 033 818 B1

**Beschreibung**

Die Erfindung betrifft ein Verfahren zum Erfassen eines Chassisniveaus eines Kraftwagens, der sich auf einer Fahrbahn befindet. Gemäß einem zweiten Aspekt betrifft die Erfindung einen Kraftwagen, insbesondere einen Personenkraftwagen, Bus oder Lastwagen mit (a) einer Chassisniveauwerterfassungsvorrichtung zum Erfassen von Chassisniveauwerten des Chassisniveaus über der Fahrbahn, (b) einer Fahrgeschwindigkeitserfassungsvorrichtung zum Erfassen einer Fahrgeschwindigkeit des Kraftwagens, (c) einer Betriebsgrößenerfassungsvorrichtung zum Erfassen einer anfahranzeigenden Betriebsgröße, aus der ein Anfahren des Kraftwagens ableitbar ist, und (d) einer elektrischen Steuerung, die mit der Chassisniveauwerterfassungsvorrichtung, der Fahrgeschwindigkeitserfassungsvorrichtung und der Betriebsgrößenerfassungsvorrichtung in Kontakt steht.

Das Dokument US5452919 offenbart eine Luftfederanlage für Fahrzeuge mit einer Niveauverstellmöglichkeit zwischen einem Normalniveau und einem Tiefniveau. Niveauregelungen von dem oder in das Tiefniveau werden abgebrochen, sobald eine geöffnete Tür oder eine betätigte Fußbremse erkannt wird. Der abgebrochene Niveauregelvorgang wird fortgesetzt, sobald das Fahrzeug eine bestimmte Fahrzeuggeschwindigkeit erreicht oder die Fußbremse gelöst wird.

Das Dokument EP0398873B1 beschreibt eine Luftfederanlage für ein Fahrzeug, wobei die Höhenänderungssignale mit mehren Filtern zur Erlangung eines geglätteten Signals beaufschlagt werden. Während des Stillstandes des Fahrzeugs wird ein anderes Filter verwendet als während der Fahrt des Fahrzeuges.

Das Dokument GB2145984A beschreibt eine elektronisch regelbares Federungssystem für ein Motorfahrzeug und einer verbesserten Höheneinstellung direkt nach dem Anlassen des Fahrzeugmotors.

Das Dokument FR2630684 offenbart ein hydropneumatisches Federungssystem für ein Fahrzeug mit einem speziell ausgebildeten Höhenregulierungsventil.

Im Stand der Technik bekannt ist ein Verfahren zum Erfassen eines Chassisniveaus eines Personenkraftwagens, der sich auf einer Fahrbahn befindet, das ein Erfassen von Chassisniveauwerten und ein Erfassen einer Fahrbahngeschwindigkeit umfasst. Wenn die Fahrgeschwindigkeit null ist, der Personenkraftwagen also steht, werden die Chassisniveauwerte mit einem Tiefpassfilter mit einer Eckfrequenz von beispielsweise von 0,1 Hz gefiltert. Auf diese Weise wird ein Chassisniveaukennwert erhalten. Durch Vibrationen oder Belastungswechsel, die beispielsweise beim Beladen des Personenkraftwagens entstehen, schwanken die Chassisniveauwerte, wobei aufgrund des Tiefpassfilters alle Schwankungen mit einer Frequenz oberhalb der Eckfrequenz in guter Näherung nicht in den Chassisniveaukennwert eingehen. Es wird ein Alarmsignal an einen Fahrer des Personenkraftwagens ausgegeben, wenn der Chassisniveaukennwert außerhalb eines vorgegebenen Chassisniveauintervalls liegt, wenn sich also beispielsweise das Chassis zu dicht an der Fahrbahn befindet. Es ist auch bekannt, in einem solchen Fall aktive Stellglieder zu aktivieren, die das Chassisniveau so verändern, dass der Chassisniveaukennwert wieder innerhalb des Chassisniveauintervalls liegt.

Ist die Fahrgeschwindigkeit von null verschieden, werden die Chassisniveauwerte mit einer deutlich kleineren Eckfrequenz von beispielsweise 0,001 Hz tiefpassgefiltert. Auf diese Weise gehen nur dauerhafte Chassisniveauänderungen in den Chassisniveaukennwert ein.

Hochfrequente Änderungen des Chassisniveaus, beispielsweise auf Grund von Fahrbahnunebenheiten, haben keinen Einfluss.

Nachteilig an dem bekannten Verfahren ist, dass es zu einer unerwünscht hohen Zahl von Fehlalarmen kommt, insbesondere beim Anfahren. Der Erfindung liegt die Aufgabe zu Grunde, Nachteile im Stand der Technik zu überwinden.

Die Erfindung löst das Problem durch ein Verfahren zum Erfassen eines Chassisniveaus eines Kraftwagens, der sich auf einer Fahrbahn befindet, nach Anspruch 1, mit den Schritten: (a) Erfassen von Chassisniveauwerten des Chassisniveaus über der Fahrbahn zu mehreren Zeitpunkten, (b) Erfassen einer Fahrgeschwindigkeit und einer anfahranzeigenden Betriebsgröße des Kraftwagens, aus der ein Anfahren des Kraftwagens ableitbar ist, (c) aus der Fahrgeschwindigkeit und der anfahranzeigenden Betriebsgröße Ermitteln, ob mit einer vorgegebenen Wahrscheinlichkeit eine Verharrungsfunktion vorliegt, in der der Kraftwagen stillsteht und kein Anfahren unmittelbar bevorsteht, (d) wenn keine Verharrungssituation (Fahrtsituation) vorliegt, Erzeugen eines Fahrt-Chassisniveaukennwerts aus den Chassisniveauwerten, und (e) Ausgeben eines Signals, wenn der Fahrt-Chassisniveaukennwert außerhalb eines Fahrt-Chassisniveauintervalls liegt.

Gemäß einem zweiten Aspekt löst die Erfindung das Problem durch einen gattungsgemäßen Kraftwagen, der eine elektrische Steuerung besitzt, die eingerichtet ist zum Durchführen eines erfindungsgemäßen Verfahrens. Gemäß einem dritten Aspekt löst die Erfindung das Problem durch einen Datenträger, auf dem ein Programm gespeichert ist, das von einer elektrischen Steuerung eines Kraftwagens ausführbar ist und ein erfindungsgemäßes Verfahren kodiert.

Vorteilhaft an dem Verfahren ist, dass bereits dann ein Fahrt-Chassisniveaukennwert erzeugt wird, wenn der Kraftwagen anfährt oder ein Anfahren unmittelbar bevor steht. Beim Anfahren kann das Anfahrmoment dazu führen, dass das Fahrzeug um seine Querachse schwenkt (nickt). Da in diesem Zustand die Fahrgeschwindigkeit noch null sein kann, wird bei bekannten Verfahren mit der höheren Eckfrequenz tiefpassgefiltert und das Nicken kann soweit auf den Chassisniveaukennwert durchschlagen, dass ein Warnsignal ausgegeben wird. Tatsächlich liegt aber keine gefährliche Situation vor, so dass diese Alarmmeldung überflüssig ist und den Fahrer irritieren kann. Dadurch, dass beim erfindungsgemäßen Verfahren bereits dann, wenn das Anfahren unmittelbar bevor steht, der Fahrt-Chassisniveaukennwert ermittelt wird, werden derartige kurzfristige Niveauwertänderungen unterdrückt, so dass keine fehlerhafte Alarmmeldung ausgegeben werden kann. Wird das Signal statt zum Erzeugen einer Warnmeldung zum Regeln des Chassisniveaus verwendet, wird entsprechend vermieden, dass das Chassisniveau ausgeregelt wird, was beim Anfahren unerwünscht ist.

Vorteilhaft ist zudem, dass die Erfindung mit sehr geringem Aufwand umsetzbar ist. So können Betriebsgrößen verwendet werden, die beim Betrieb des Kraftwagens ohnehin erfasst werden. Bestehende Kraftwagen sind daher leicht so umrüstbar, dass sie das erfindungsgemäße Verfahren ausführen können.

Im Rahmen der vorliegenden Beschreibung wird unter einem Erfassen von Chassisniveauwerten insbesondere jeder Vorgang verstanden, der Informationen darüber zur Verfügung stellt, wie das Chassis relativ zu der Fahrbahn angeordnet ist. Bei Fahrzeugen mit selbsttragender Karosserie wird als Chassisniveau das Karosserieniveau ermittelt. Es ist möglich, nicht aber notwendig, dass die Chassisniveauwerte einen tatsächlichen Abstand des Chassis von der Fahrbahn kodieren. Es ist zudem möglich, dass beispielsweise eine Abweichung des Chassisniveaus von einem Soll-Chassisniveau erfasst, beispielsweise gemessen wird. Vorteilhafterweise werden die Chassisniveauwerte in periodischen Zeitabschnitten erfasst, beispielsweise jede 0,1 Sekunden.

Unter einer anfahranzeigenden Betriebsgröße wird insbesondere jede Betriebsgröße verstanden, deren Vorliegen oder Änderung auf ein anfahrendes Kraftfahrzeug schließen lässt. Es kann sich dabei um Motorbetriebsgrößen handeln, insbesondere um eine Motordrehzahl, ein Motordrehmoment, eine eingespritzte Kraftstoffmenge, ein Motorengeräusch, eine Fahrpedalstellung oder Ähnliches. Es ist aber auch möglich, dass eine Kombination aus zwei oder mehreren Betriebsgrößen verwendet wird, wie beispielsweise der Kombination aus eingelegtem Gang, im Betrieb befindlichen Motor und nicht voll eingekuppelter Kupplung. In diesem Fall ist die anfahranzeigende Betriebsgröße das Tripel aus den genannten einzelnen Betriebsgrößen. Darunter, dass aus der anfahranzeigenden Betriebsgröße das Anfahren des Kraftwagens ableitbar ist, wird insbesondere verstanden, dass eine solche Betriebsgröße verwendet wird, die dann, wenn sie in einem vorbestimmten Intervall liegt, mit einer vorgegebenen Wahrscheinlichkeit von beispielsweise mehr als 80% oder 90% die Aussage zulässt, dass der Kraftwagen gerade anfährt oder innerhalb eines Zeitintervalls von beispielsweise 5 Sekunden anfahren wird.

Unter dem Merkmal, dass ermittelt wird, ob eine Verharrungssituation vorliegt, ist insbesondere zu verstehen, dass mit einer erhöhten Wahrscheinlichkeit von beispielsweise über 80% die Aussage getroffen werden kann, dass der Kraftwagen still steht und das kein Anfahren in einem vorgegebenen Zeitintervall von beispielsweise 5 Sekunden bevorsteht. Die Aussage, dass eine Verharrungssituation vorliegt, muss also nicht mit einhundertprozentiger Sicherheit getroffen werden.

Das Verfahren umfasst die Schritte eines Erzeugens eines Verharrungs-Chassisniveaukennwerts aus den Chassisniveauwerten und eines Ausgebens eines Signals, wenn der Verharrungs-Chassisniveaukennwert außerhalb eines Verharrungs-Chassisniveauintervalls liegt. Es ist dabei möglich, dass das Fahrt-Chassisniveauintervall und das Verharrungs-Chassisniveauintervall identisch sind. Bei dem bevorzugten Verfahren wird damit aus den kontinuierlich erfassten Chassisniveauwerten entweder der Fahrt-Chassisniveaukennwert oder der Verharrungs-Chassisniveaukennwert erzeugt, beispielsweise berechnet.

Erfindungsgemäß ist das Erfassen von Chassisniveauwerten. Ein kontinuierliches Erfassen und das Erzeugen des Fahrt-Chassisniveaukennwerts und des Verharrungs-Chassisniveaukennwerts umfasst die Schritte eines Filterns der Chassisniveauwerte mit einem Tiefpassfilter, wobei der Tiefpassfilter einen Verharrungs-Filtermodus und mindestens einen im Vergleich zum Verharrungs-Filtermodus schnelle Schwankungen der Chassisniveauwerte stärker dämpfenden Fahrt-Filtermodus besitzt, und eines Filterns in dem Fahrt-Filtermodus, wenn keine Verharrungssituation vorliegt, und eines Filterns in dem Verharrungs-Filtermodus, wenn eine Verharrungssituation vorliegt. Vorteilhaft hieran ist, dass auf besonders einfache Weise die Chassisniveaukennwerte ermittelt werden und Kraftwagen, auf denen Verfahren nach dem Stand der Technik ausgeführt werden, leicht auf das erfindungsgemäße Verfahren umgerüstet werden können.

Besonders bevorzugt besitzt der Tiefpassfilter im Verharrungs-Filtermodus eine Verharrungs-Eckfrequenz, die mindestens zehnfach größer ist als eine Fahrt-Eckfrequenz im Fahrt-Filtermodus. Der Tiefpassfilter kann auch ein mathematischer Filter sein, also ein Algorithmus, der auf einer elektrischen Steuerung läuft und digitale Daten verarbeitet.

Besonders bevorzugt liegt die Verharrungs-Eckfrequenz unter 1 Hz und die Fahrt-Eckfrequenz liegt unter 0,01 Hz. Diese Werte haben sich als besonders geeignet herausgestellt, um einerseits Abweichungen des Chassisniveaus von einem vorgegebenen Chassisniveauintervall sicher zu detektieren und andererseits Fehlalarme zu vermeiden.

Besonders bevorzugt wird das Verfahren beständig wiederholt. Beispielsweise wird das Verfahren so lange wiederholt, wie eine elektrische Motorsteuerung des Kraftwagens in Betrieb ist.

In einer bevorzugten Ausführungsform umfasst das erfindungsgemäße Verfahren die Schritte eines Vergleichens der Fahrgeschwindigkeit mit einer Schwellen-Fahrgeschwindigkeit, eines Vergleichens der anfahranzeigenden Betriebsgröße mit einem Schwellenwert und eines Annehmens einer Verharrungssituation, wenn die Fahrgeschwindigkeit kleiner als die Schwellen-Fahrgeschwindigkeit ist und die Betriebsgröße kleiner als der Schwellenwert ist. Zu dem Fall, dass die Betriebsgröße kleiner als der Schwellenwert ist, ist der Fall äquivalent, dass eine andere Betriebsgröße, nämlich das Negative der Betriebsgröße, größer ist als ein anderer Schwellenwert, nämlich als das Negative des Schwellenwerts.

Als besonders geeignete Betriebsgröße hat sich die Motordrehzahl des Motors des Kraftwagens oder eine mit der Motordrehzahl korrelierende Motorkennzahl herausgestellt. Derartige Motorkennzahlen können beispielsweise das Motormoment, die Fahrpedalstellung, ein Kraftstofffluss in den Motor, eine Einspritzmenge, ein Motorgeräusch oder Ähnliches sein.

In einer bevorzugten Ausführungsform umfasst das Ermitteln, ob eine Verharrungssituation vorliegt, ein Vergleichen der Motordrehzahl mit einer vorgegebenen Schwellen-Motordrehzahl. Diese vorgegebene Schwellen-Motordrehzahl liegt vorteilhafter Weise so weit oberhalb einer Leerlauf-Drehzahl des Motors, dass eine Schwankung der Leerlaufdrehzahl die Schwellen-Motordrehzahl nicht überschreitet. Beispielsweise liegt die Schwellen-Motordrehzahl 15 % oberhalb der Leerlaufdrehzahl.

Um das Chassisniveau des Kraftwagens in einem vorgegebenen Soll-Chassisniveauintervall zu halten, ist bevorzugt vorgesehen, dass das Signal zum Regeln des Chassisniveaus auf einen Wert im Soll-Chassisniveau verwendet wird.

Alternativ oder additiv kann das Signal auch zum Ausgeben einer Warnmeldung an den Bediener des Kraftwagens verwendet werden. Eine derartige Warnmeldung erfolgt beispielsweise durch eine Warnlampe oder ein akustisches Signal.

Besonders einfach lassen sich die Fahrgeschwindigkeit des Kraftwagens und/oder die anfahranzeigenden Betriebsgröße durch ein Auslesen von zugehörigen Daten von einem Datenbus des Kraftwagens erhalten. Derartige Datenbusse können beispielsweise ein CAN-Datenbus oder ein Flexray-Datenbus sein.

Im Folgenden werden Ausführungsformen der Erfindung an Hand der beigefügten Zeichnungen näher erläutert. Dabei zeigt

Figur 1 eine schematische Zeichnung eines erfindungsgemäßen Kraftfahrzeugs,

Figur 2 ein Diagramm, in dem die Motordrehzahl des Motors des Kraftwagens, die Höhe des Hecks relativ zu einer Null-Lage und die Fahrgeschwindigkeit des Kraftwagens aufgetragen ist und

Figur 3 ein Diagramm, in dem die durch Tiefpassfilterung in einem VerharrungsFiltermodus einerseits und einem Fahrt-Filtermodus andererseits erhaltenen Chassisniveaukennwerte über die Zeit nach einem Anfahren des Kraftwagens aufgetragen ist.

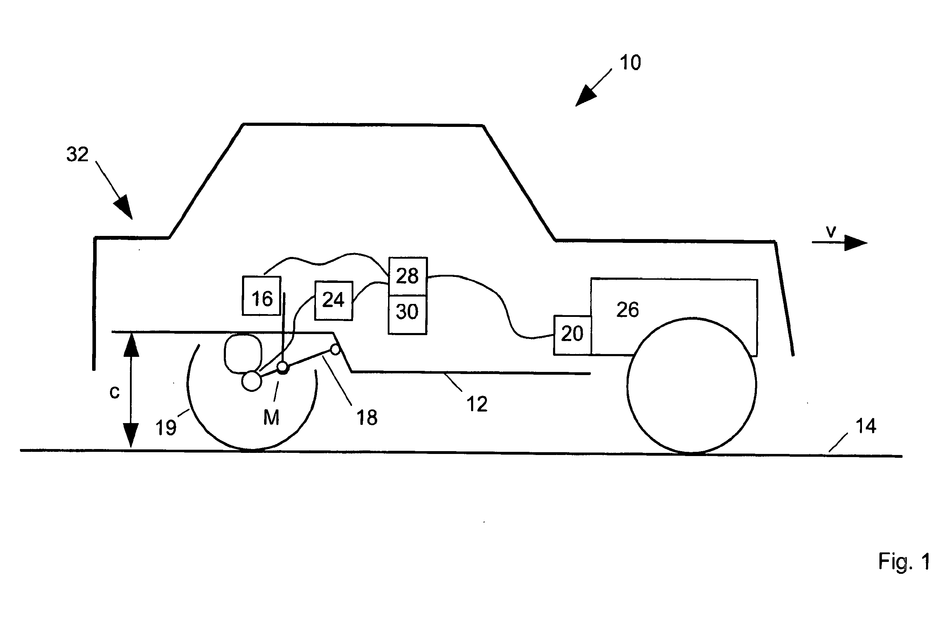

Figur 1 zeigt einen luftgefederten Personenkraftwagen (PKW) 10 mit einem Chassis 12. Das Chassis 12 befindet sich auf einem Chassisniveau C oberhalb einer Fahrbahn 14 des PKW 10. Mittels einer Chassisniveauwerterfassungsvorrichtung 16 wird das Chassisniveau C dadurch erfasst, dass der Abstand zwischen einem Achspunkt M der Hinterachse mit Hinterachse 18 zum Chassis 12 ermittelt wird.

Über eine Fahrgeschwindigkeitserfassungsvorrichtung in Form eines Tachometers 20 wird eine Rad-Drehgeschwindigkeit $n_{Rad}$ eines Rads 19 ermittelt und daraus auf eine Fahrgeschwindigkeit v des PKW 10 geschlossen. Mit Hilfe einer Betriebsgrößenerfassungsvorrichtung in Form eines Drehzahlmessers 24 wird eine anfahranzeigende Betriebsgröße in Form einer Motordrehzahl $n_{Motor}$ eines Motors 26 erfasst. Die Chassisniveauwerterfassungsvorrichtung 16, das Tachometer 20 und der Drehzahlmesser 24 sind elektrisch mit einer elektrischen Steuerung 28 verbunden, die eingerichtet ist, um das im Folgenden beschriebene Verfahren durchzuführen.

Von der Chassisniveauwerterfassungsvorrichtung 16 werden in vorgegebenen Zeitabständen, beispielsweise jede Zehntelsekunde, Chassisniveauwerte verfasst und an die elektrische Steuerung 28 gesendet. Simultan werden von dem Tachometer 20 Fahrgeschwindigkeitsmesswerte verfasst und ebenfalls an die elektrische Steuerung 28 gesendet. Die elektrische Steuerung 28 empfängt zudem in regelmäßigen Abständen erfasste Motordrehzahlmesswerte von dem Drehzahlmesser 24.

In einem digitalen Speicher 30 der elektrischen Steuerung 28 sind ein Motordrehzahlschwellenwert $n_{Schwelle}$ und ein Fahrgeschwindigkeitsschwellenwert $v_{Schwelle}$ abgelegt. Wenn die Motordrehzahl $n_{Motor}$ unterhalb des Motordrehzahlschwellenwerts $n_{Schwelle}$ und die Fahrgeschwindigkeit v unterhalb des Fahrgeschwindigkeitsschwellenwerts $v_{Schwelle}$ liegt, wird eine Verharrungssituation angenommen. Die elektrische Steuerung 28 filtert daraufhin die erfassten Chassisniveauwerte mit einem Tiefpassfilter, der eine Verharrungs-Eckfrequenz von 0,01 Hz besitzt. Der so erhaltene Verharrungs-Chassisniveaukennwert, der ebenfalls in regelmäßigen Zeitabständen ermittelt wird, wird daraufhin überprüft, ob er innerhalb eines Verharrungs-Chassisniveauintervalls liegt. Ist der Verharrungs-Chassisniveaukennwert kleiner als eine untere Intervallgrenze des Verharrungs-Chassisniveauintervalls, wird eine nicht eingezeichnete "pneumatische" Lageregelung aktiviert, die das Chassis 12 gegenüber der Fahrbahn 14 anhebt. Liegt der Verharrungs-Chassisniveaukennwert oberhalb einer oberen Intervallgrenze des Verharrungs-Chassisniveauintervalls, so vermindert die Lageregelung die Höhe des Chassis 12 gegenüber der Fahrbahn 14. Alternativ wird in einem oder beiden der Fälle über ein nicht eingezeichnetes Display eine Warnmeldung an einen nicht eingezeichneten Fahrer des Pkws 10 ausgegeben.

Übersteigt die Fahrgeschwindigkeit den Fahrgeschwindigkeitsschwellenwert $v_{Schwelle}$, der beispielsweise bei 0,001 km/h liegt, oder überschreitet die Motordrehzahl $n_{Motor}$ den Motordrehzahlschwellenwert $n_{Schwelle}$, der bei dem 1,2-fach einer Leerlaufdrehzahl des Motors 26 liegt, so wird von der elektrischen Steuerung 28 das Vorliegen einer Fahrtsituation angenommen. Der Tiefpassfilter wird dann vom Verharrungs-Filtermodus in den Fahrt-Filtermodus geschaltet. Im Fahrt-Filtermodus werdend die Chassisniveauwerte mit einer Fahrt-Eckfrequenz von 0,001 Hz gefiltert. Das Fahrt-Chassisniveauintervall entspricht dem Verharrungs-Chassisniveauintervall. Liegt der Fahrt-Chassisniveaukennwert außerhalb des Fahrt-Chassisniveauintervalls, werden die oben beschriebenen Verfahrensschritte zur Regelung des Chassisniveaus durchgeführt.

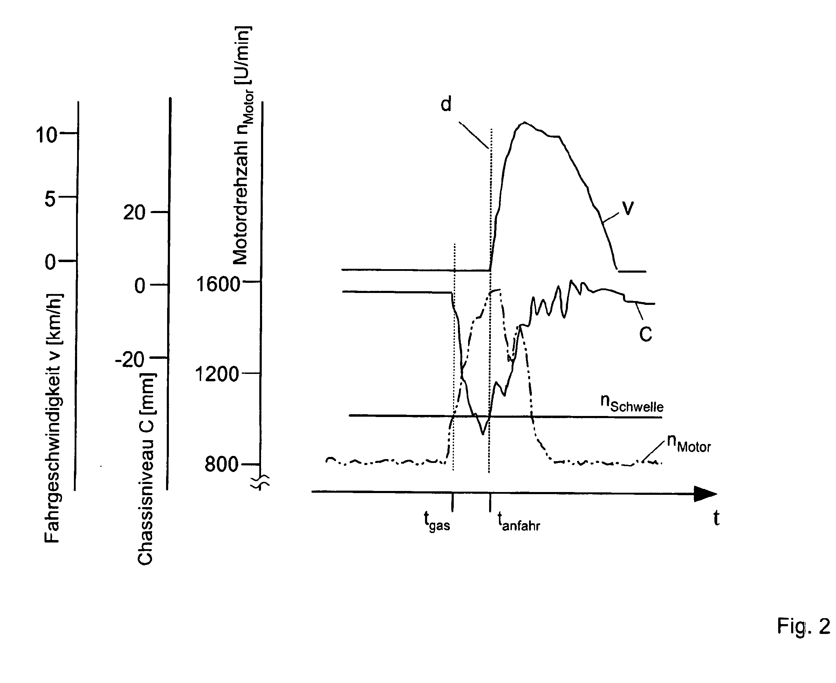

Figur 2 zeigt ein Diagramm, das die Motordrehzahl $n_{Motor}(t)$, das Chassisniveau c(t) und die Fahrgeschwindigkeit v(t) über die Zeit t aufträgt. Eine vertikale Kurve d markiert einen Anfahrzeitpunkt $t_{anfahr}$. Es ist zu erkennen, dass zu einem vor dem Anfahrzeitpunkt $t_{anfahr}$ liegenden Zeitpunkt $t_{gas}$ ein Fahrpedal des PKW gedrückt wird, wodurch die Motordrehzahl $n_{Motor}(t)$ ansteigt. Zu diesem Zeitpunkt verringert sich das Chassisniveau c(t), da ein Heck 32 (Figur 1) des Fahrzeugs durch das Antriebsmoment abgesenkt ist. Beim Überschreiten des Motordrehzahlschwellenwerts $n_{Schwelle}$ schaltet die elektrische Steuerung 28 in den Fahrt-Filtermodus. Kurz nach dem Anfahrzeitpunkt $t_{anfahr}$ steigt die Fahrgeschwindigkeit v an. Es wird also bereits zu dem Zeitpunkt $t_{anfahr}$, wenn das Anfahren unmittelbar bevorsteht, die Fahrgeschwindigkeit v aber noch null ist, eine Fahrsituation angenommen.

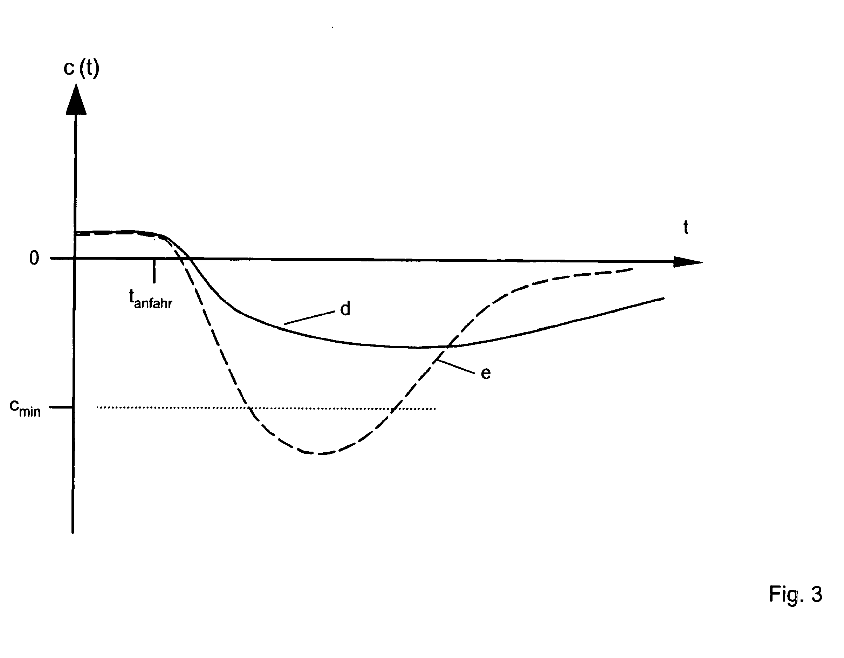

In Figur 3 ist für den Figur 2 gezeigten zeitlichen Verlauf des Chassisniveaus c der Fahrt-Chassisniveaukennwert $C_{Kenn}^{Fahrt}$ (t) für eine Tiefpassfilterung mit einer Fahrt-Eckfrequenz von $F_{Fahrt}$ = 0,001 Hz (Kurve d) und der Verharrungs-Chassisniveaukennwert $C_{Kenn}^{Verharrung}$ (t) einer Verharrungs-Eckfrequenz von $F_{Verharrung}$ = 0,01 Hz (Kurve e) gezeigt. Als waagerechte Linie $C_{min}$ ist die untere Intervallgrenze des Chassisniveauintervalls eingezeichnet. Es ist zu erkennen, dass bei einer Filterung mit der Verharrungs-Eckfrequenz $F_{Verharrung}$ (Kurve e) nach dem Anfahren der Verharrungs-Chassisniveaukennwert $C_{Kenn}^{Verharrung}$ unter die untere Chassisniveauintervallgrenze fällt, so dass eine Warnmeldung ausgegeben würde oder die elektrische Steuerung die Lagerregelung des PKW 10 (Figur 1) ansteuern würde, um das Chassisniveau anzuheben. Mit der Fahrt-Eckfrequenz $F_{fahrt}$ gefiltert (Kurve d) unterschreitet der Fahrt-Chassisniveaukennwert $C_{Kenn}^{Fahrt}$ die untere Grenze des Chassisniveauintervalls $C_{min}$ jedoch nicht, so dass keine überflüssige Warnmeldung ausgegeben wird, beziehungsweise keine überflüssige Lagerregelung ausgeführt wird.

Durch das oben beschriebene erfindungsgemäße Verfahren werden also überflüssige und störende Warnmeldungen beziehungsweise Lagerregelungsmanöver vermieden.

## Patentansprüche

1. Verfahren zum Erfassen eines Chassisniveaus (C) eines Kraftwagens (10), der sich auf einer Fahrbahn (14) befindet, mit den Schritten:

   (a) Erfassen von Chassisniveauwerten (C) des Chassisniveaus über der Fahrbahn (14) zu mehreren Zeitpunkten (t),
   (b) Erfassen einer Fahrgeschwindigkeit (v) und einer anfahranzeigenden Betriebsgröße ($n_{Motor}$) des Kraftwagens, aus der ein Anfahren des Kraftwagens (10) ableitbar ist,
   (c) aus der Fahrgeschwindigkeit (v) und der anfahranzeigenden Betriebsgröße ($n_{Motor}$) Ermitteln, ob mit einer vorgegebenen Wahrscheinlichkeit eine Verharrungsfunktion vorliegt, in der der Kraftwagen (10) stillsteht und kein Anfahren unmittelbar bevorsteht,
   (d) wenn keine Verharrungssituation (Fahrtsituation) vorliegt, Erzeugen eines Fahrt-Chassisniveaukennwerts ($C_{Kenn}^{Fahrt}$) aus den Chassisniveauwerten (C), und
   (e) Ausgeben eines Signals, wenn der Fahrt-Chassisniveaukennwert ($C_{Kenn}^{Fahrt}$) außerhalb eines Fahrt-Chassisniveauintervalls liegt, und
   (f) wenn eine Verharrungssituation vorliegt, Erzeugen eines Verharrungs-Chassisniveaukennwerts ($C_{Kenn}^{Verharrung}$) aus den Chassisniveauwerten (C(t)) und
   (g) Ausgeben eines Signals, wenn der Verharrungs-Chassisniveaukennwert ($C_{Kenn}^{Verharrung}$) außerhalb eines Verharrungs-Chassisniveauintervalls liegt
   (h) wobei Schritt (a) ein kontinuierliches Erfassen von Chassisniveauwerten (C(t)) ist und das Erzeugen des Fahrt-Chassisniveaukennwerts ($C_{Kenn}^{Fahrt}(t)$) und des Verharrungs-Chassisniveau¬kennwerts ($C_{Kenn}^{Verharrung}$) die folgenden

Schritte umfasst:

(i) Filtern der Chassisniveauwerten (C(t)) mit einem Tiefpassfilter,

(ii) wobei der Tiefpassfilter einen Verharrungs-Filtermodus und mindestens einen im Vergleich zum Verharrungs-Filtermodus schnelle Schwankungen der Chassisniveauwerte stärker dämpfenden Fahrt-Filtermodus besitzt und

(iii) Filtern in dem Fahrt-Filtermodus, wenn keine Verharrungssituation vorliegt und Filtern in dem Verharrungs-Filtermodus, wenn eine Verharrungssituation vorliegt.

2. Verfahren nach Anspruch 1, **dadurch gekennzeichnet, dass** der Tiefpassfilter im Verharrungs-Filtermodus eine Verharrungs-Eckfrequenz ($f_{Verharrung}$) besitzt, die mindestens zehnfach größer ist als eine Fahrt-Eckfrequenz ($f_{Fahrt}$) im Fahrt-Filtermodus.

3. Verfahren nach Anspruch 2, **dadurch gekennzeichnet, dass** die Verharrungs-Eckfrequenz ($f_{verharrung}$) unter 1 Hz, insbesondere unter 0,5 Hz, liegt und dass die Fahrt-Eckfrequenz ($f_{Fahrt}$) unter 0,01 Hz, insbesondere unter 0,005 Hz liegt.

4. Verfahren nach einem der vorstehenden Ansprüche, **dadurch gekennzeichnet, dass** das Verfahren beständig wiederholt wird.

5. Verfahren nach einem der vorstehenden Ansprüche, **dadurch gekennzeichnet, dass** das Ermitteln, ob eine Verharrungssituation vorliegt, die folgenden Schritte umfasst:

- Vergleichen der Fahrgeschwindigkeit (v) in einer Schwellen-Fahrgeschwindigkeit ($v_{Schwelle}$),
- Vergleichen der anfahranzeigenden Betriebsgröße ($n_{Motor}$) mit einem Schwellenwert ($n_{Schwelle}$) und
- Annehmen einer Verharrungssituation, wenn die Fahrgeschwindigkeit (v) kleiner als die Schwellen-Fahrgeschwindigkeit ($v_{Schwelle}$) ist und die Betriebsgröße ($n_{Motor}$) kleiner als der Schwellenwert ($n_{Schwelle}$) ist.

6. Verfahren nach einem der vorstehenden Ansprüche, **dadurch gekennzeichnet, dass** die Betriebsgröße eine Motordrehzahl ($n_{Motor}$) eines Motors (26) des Kraftwagens (10) oder eine mit der Motordrehzahl ($n_{Motor}$) korrelierte Motorkennzahl ist.

7. Verfahren nach Anspruch 6, **dadurch gekennzeichnet, dass** das Ermitteln, ob eine Verharrungssituation vorliegt, ein Vergleichen der Motordrehzahl ($n_{Motor}$) mit einer vorgegebenen Schwellen-Motordrehzahl ($n_{Schwelle}$) umfasst.

8. Verfahren nach einem der vorstehenden Ansprüche, **dadurch gekennzeichnet, dass** das Signal zum Regeln des Chassisniveaus (C) auf ein Soll-Chassisniveau verwendet wird.

9. Verfahren nach einem der vorstehenden Ansprüche, **dadurch gekennzeichnet, dass** das Signal zum Ausgeben einer Warnmeldung an einen Bediener des Kraftwagens verwendet wird.

10. Verfahren nach einem der vorstehenden Ansprüche, **dadurch gekennzeichnet, dass** das Erfassen der Fahrgeschwindigkeit (v) des Kraftwagens und/oder das Erfassen der anfahranzeigenden Betriebsgröße ($n_{Motor}$) zum Auslesen von zugehörigen Daten von einem Datenbus, insbesondere einem CAN-Datenbus oder Flexray-Datenbus, umfasst.

11. Kraftwagen, insbesondere Personenkraftwagen (10), Bus oder Lastkraftwagen, mit

(a) einer Chassisniveauwerterfassungsvorrichtung (16) zum Erfassen von Chassisniveauwerten des Chassisniveaus (C) über der Fahrbahn (14),

(b) einer Fahrgeschwindigkeitserfassungsvorrichtung (20) zum Erfassen einer Fahrgeschwindigkeit (v) des Kraftwagens (10),

(c) einer Betriebsgrößenerfassungsvorrichtung zum Erfassen einer anfahranzeigenden Betriebsgröße ($n_{Motor}$) aus der ein Anfahren des Kraftwagens ableitbar ist, und

(d) einer elektrischen Steuerung (28), die mit der Chassisniveauwerterfassungsvorrichtung (16), der Fahrgeschwindigkeitserfassungsvorrichtung und der Betriebsgrößenerfassungsvorrichtung in Kontakt steht, **dadurch gekennzeichnet, dass** die elektrische Steuerung (28) eingerichtet ist zum Durchführen eines Verfahrens nach einem der vorstehenden Ansprüche.

12. Kraftwagen nach Anspruch 11, **gekennzeichnet durch** eine Chassisniveauregelvorrichtung, die mit der elektrischen Steuerung (28) zum Regeln das Chassisniveaus (C) auf einen vorgegebenen Chassisniveauwert verbunden ist.

13. Datenträger, auf dem ein Programm gespeichert ist, das von einer elektrischen Steuerung (28) eines Kraftwagens (10) ausführbar ist und ein Verfahren nach einem der Ansprüche 1-10 kodiert.

**Claims**

1. Method for recording the level (C) of a chassis of a motor vehicle (10) which is located on a carriageway (14), having the steps:

   (a) recording of chassis level values (C) of the chassis level above the carriageway (14) at a plurality of times (t),
   (b) recording of a velocity (v) and of a starting-indicating operating variable ($n_{Engine}$) of the motor vehicle from which starting of the motor vehicle (10) can be derived,
   (c) determination from the velocity (v) and the starting-indicating operating variable ($n_{Engine}$) whether there is a predefined probability of a change-prevention function being present in which the motor vehicle (10) is stationary and starting is not immediately imminent,
   (d) if no change-prevention situation (travel situation) is present, generation of a travel chassis level characteristic value ($C_{Charac}^{Travel}$) from the chassis level values (C), and
   (e) outputting of a signal if the travel chassis level characteristic value ($C_{Charac}^{Travel}$) is outside a travel chassis level interval, and
   (f) if a change-prevention situation is present, generation of a change-prevention chassis level characteristic value ($C_{Charac}^{Change-prev}$) from the chassis level values (C(t)) and
   (g) outputting of a signal if the change-prevention chassis level characteristic value ($C_{Charac}^{Change-prev}$) is outside a change-prevention chassis level interval,
   (h) wherein step (a) comprises continuous recording of chassis level values (C(t)) and the generation of the travel chassis level characteristic value ($C_{Charac}^{Travel}(t)$) and the change-prevention chassis level characteristic value ($C_{Charac}^{Change-prev}$) comprises the following steps:

   (i) filtering of the chassis level values (C(t)) with a low-pass filter,
   (ii) wherein the low-pass filter has a change-prevention filter mode and at least one travel filter mode which damps rapid fluctuations in the chassis level values more effectively compared to the change-prevention filter mode, and
   (iii) filtering in the travel filter mode if no change-prevention situation is present and filtering in the change-prevention filter mode if a change-prevention situation is present.

2. Method according to Claim 1, **characterized in that** in the change-prevention filter mode the low-pass filter has a change-prevention cut-off frequency ($f_{change-prev}$) which is at least ten times greater than a travel cut-off frequency ($f_{Travel}$) in the travel filter mode.

3. Method according to Claim 2, **characterized in that** the change-prevention cut-off frequency ($f_{Cut-off}$) is below 1 Hz, in particular below 0.5 Hz, and **in that** the travel cut-off frequency ($f_{Travel}$) is below 0.01 Hz, in particular below 0.005 Hz.

4. Method according to one of the preceding claims, **characterized in that** the method is repeated continuously.

5. Method according to one of the preceding claims, **characterized in that** the determination as to whether a change-prevention situation is present comprises the following steps:

   - comparison of the velocity (v) with a threshold Velocity ($V_{Threshold}$),
   - comparison of the starting-indicating operating variable ($n_{Engine}$) with a threshold value ($n_{Threshold}$), and
   - assumption of a change-prevention situation if the velocity (v) is lower than the threshold velocity ($V_{Threshold}$) and the operating variable ($n_{Engine}$) is lower than the threshold value ($n_{Threshold}$).

6. Method according to one of the preceding claims, **characterized in that** the operating variable is an engine rotational speed ($n_{Engine}$) of an engine (26) of the motor vehicle (10) or an engine characteristic number which is correlated to the engine rotational speed ($n_{Engine}$).

7. Method according to Claim 6, **characterized in that** the determination as to whether a change-prevention situation is present comprises comparison of the engine rotational speed ($n_{Engine}$) with a predefined threshold engine rotational speed ($n_{Threshold}$).

8. Method according to one of the preceding claims, **characterized in that** the signal is used to regulate the chassis level (C) to a setpoint chassis level.

9. Method according to one of the preceding claims, **characterized in that** the signal is used to output a warning message to an operator of the motor vehicle.

10. Method according to one of the preceding claims, **characterized in that** the recording of the velocity (v) of the motor vehicle and/or the recording of the starting-indicating operating variable ($n_{Engine}$) comprises reading out associated data from a data bus, in particular a CAN data bus or flexray data bus.

11. Motor vehicle, in particular a passenger motor vehicle (10), bus or lorry, having

(a) a chassis level value-recording device (16) for recording chassis level values of the chassis level (C) above the carriageway (14),
(b) a velocity-recording device (20) for recording a velocity (v) of the motor vehicle (10),
(c) an operating variable-recording device for recording a starting-indicating operating variable ($n_{Engine}$) from which starting of the motor vehicle can be derived, and
(d) an electric controller (28) which is in contact with the chassis level value-recording device (16), the velocity-recording device and the operating variable-recording device, **characterized in that** the electric controller (28) is configured to carry out a method according to one of the preceding claims.

12. Motor vehicle according to Claim 11, **characterized by** a chassis level control device which is connected to the electric controller (28) for adjusting the chassis level (C) to a predefined chassis level value.

13. Data carrier in which a program is stored which can be executed by an electric controller (28) of a motor vehicle (10) and which encodes a method according to one of Claims 1 - 10.

**Revendications**

1. Procédé pour détecter un niveau de châssis (C) d'un véhicule automobile (10) qui se trouve sur une voie de circulation (14), comprenant les étapes suivantes :

(a) détection de valeurs de niveau de châssis (C) du niveau du châssis au-dessus de la voie de circulation (14) à plusieurs instants (t),
(b) détection d'une vitesse de déplacement (v) et d'une grandeur opérationnelle ($n_{motor}$) indiquant le démarrage du véhicule automobile, à partir de laquelle peut être déduit un démarrage du véhicule automobile (10),
(c) à partir de la vitesse de déplacement (v) et de la grandeur opérationnelle ($n_{motor}$) indiquant le démarrage, détermination s'il existe, avec une probabilité prédéfinie, une fonction d'arrêt dans laquelle le véhicule automobile (10) est immobile et il n'y a aucun démarrage directement imminent,
(d) lorsqu'il n'existe aucune situation d'arrêt (situation de conduite), génération d'une valeur caractéristique de niveau de châssis en déplacement $(C_{Kenn}^{Fahrt})$ à partir des valeurs de niveau de châssis (C), et
(e) délivrance d'un signal lorsque la caractéristique de niveau de châssis en déplacement $(C_{Kenn}^{Fahrt})$ se trouve en-dehors d'un intervalle de niveau de châssis en déplacement, et
(f) lorsqu'il existe une situation d'arrêt, génération d'une valeur caractéristique de niveau de châssis à l'arrêt $(C_{Kenn}^{Verharrung})$ à partir des valeurs de niveau de châssis (C(t)), et
(g) délivrance d'un signal lorsque la caractéristique de niveau de châssis à l'arrêt $(C_{Kenn}^{Verharrung})$ se trouve en-dehors d'un intervalle de niveau de châssis à l'arrêt,
(h) l'étape (a) étant une détection continue des valeurs de niveau de châssis (C(t)) et la génération de la caractéristique de niveau de châssis en déplacement $(C_{Kenn}^{Fahrt}(t))$ et de la valeur caractéristique de niveau de châssis à l'arrêt $(C_{Kenn}^{Verharrung})$ comprenant les étapes suivantes :

(i) filtrage des valeurs de niveau de châssis (C(t)) avec un filtre passe-bas,
(ii) le filtre passe-bas possédant un mode de filtrage à l'arrêt et au moins un mode de filtrage en déplacement qui affaiblit plus fortement les fluctuations rapides des valeurs de niveau de châssis en comparaison du mode de filtrage à l'arrêt et
(iii) filtrage dans le mode de filtrage en déplacement lorsqu'une situation d'arrêt n'est pas présente et filtrage dans le mode de filtrage à l'arrêt lorsqu'une situation d'arrêt est présente.

2. Procédé selon la revendication 1, **caractérisé en ce que** le filtre passe-bas possède, dans le mode de filtrage à l'arrêt, une fréquence de coupure d'arrêt ($f_{Verharrung}$) qui est au moins dix fois plus grande qu'une fréquence de coupure en déplacement ($f_{Fahrt}$) dans le mode de filtrage en déplacement.

3. Procédé selon la revendication 2, **caractérisé en ce que** la fréquence de coupure d'arrêt ($f_{Verharrung}$) est inférieure à 1 Hz, notamment inférieure à 0,5 Hz, et **en ce que** la fréquence de coupure en déplacement ($f_{Fahrt}$) est inférieure à 0,01 Hz, notamment inférieure à 0,005 Hz.

4. Procédé selon l'une des revendications précédentes, **caractérisé en ce que** le procédé est constamment répété.

5. Procédé selon l'une des revendications précédentes, **caractérisé en ce que** la détermination de la présence ou non d'une situation d'arrêt comprend les étapes suivantes :

- comparaison de la vitesse de déplacement (v) avec une vitesse de déplacement de seuil ($V_{Schwelle}$),
- comparaison de la grandeur opérationnelle ($n_{motor}$) indiquant le démarrage avec une valeur de seuil ($n_{Schwelle}$) et
- supposition de la présence d'une situation d'arrêt lorsque la vitesse de déplacement (v) est inférieure à la vitesse de déplacement de seuil ($V_{Schwelle}$) et la grandeur opérationnelle ($n_{motor}$) est inférieure à la valeur de seuil ($n_{Schwelle}$).

6. Procédé selon l'une des revendications précédentes, **caractérisé en ce que** la grandeur opérationnelle est une vitesse de rotation de moteur ($n_{Motor}$) d'un moteur (26) du véhicule automobile (10) ou un indice de moteur corrélé avec la vitesse de rotation de moteur ($n_{Motor}$).

7. Procédé selon la revendication 6, **caractérisé en ce que** la détermination de la présence ou non d'une situation d'arrêt comprend une comparaison de la vitesse de rotation de moteur ($n_{Motor}$) avec une vitesse de rotation de moteur de seuil ($n_{Schwelle}$) prédéfinie.

8. Procédé selon l'une des revendications précédentes, **caractérisé en ce que** le signal est utilisé pour réguler le niveau de châssis (C) à un niveau de châssis de consigne.

9. Procédé selon l'une des revendications précédentes, **caractérisé en ce que** le signal est utilisé pour délivrer un message d'alerte à un opérateur du véhicule automobile.

10. Procédé selon l'une des revendications précédentes, **caractérisé en ce que** la détection de la vitesse de déplacement (v) du véhicule automobile et/ou la détection de la grandeur opérationnelle ($n_{motor}$) indiquant le démarrage comprend la lecture de données associées d'un bus de données, notamment d'un bus de données CAN ou d'un bus de données Flexray.

11. Véhicule automobile, notamment voiture de tourisme (10), autobus ou poids lourd, comprenant

(a) un dispositif de détection de valeurs de niveau de châssis (16) pour détecter des valeurs de niveau de châssis du niveau du châssis (C) au-dessus de la voie de circulation (14),
(b) un dispositif de détection de vitesse de déplacement (20) pour détecter une vitesse de déplacement (v) du véhicule automobile (10),
(c) un dispositif de détection de grandeur opérationnelle pour détecter une grandeur opérationnelle ($n_{motor}$) indiquant le démarrage, à partir de laquelle peut être déduit un démarrage du véhicule automobile, et
(d) une commande électrique (28) qui est en contact avec le dispositif de détection de valeurs de niveau de châssis (16), le dispositif de détection de vitesse de déplacement et le dispositif de détection de grandeur opérationnelle,

**caractérisé en ce que** la commande électrique (28) est configurée pour mettre en oeuvre un procédé selon l'une des revendications précédentes.

12. Véhicule automobile selon la revendication 11, **caractérisé par** un dispositif de régulation de niveau de châssis qui est relié avec la commande électrique (28) pour réguler le niveau de châssis (C) à une valeur de niveau de châssis prédéfinie.

13. Support de données sur lequel est enregistré un programme qui peut être exécuté par une commande électrique (28) d'un véhicule automobile (10) et qui code un procédé selon l'une des revendications 1 à 10.

Fig. 1

Fig. 2

Fig. 3

EP 2 033 818 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5452919 A
- EP 0398873 B1
- GB 2145984 A
- FR 2630684